# EUROPÄISCHE PATENTSCHRIFT

(11) **EP 4 107 493 B1**
(45) Veröffentlichungstag und Bekanntmachung des Hinweises auf die Patenterteilung: **18.09.2024**
(21) Anmeldenummer: 21702471.0
(22) Anmeldetag: 28.01.2021
(51) Int. Cl.: G01F 23/296, G01N 9/00, G01N 11/16

(54) **VIBRONISCHER SENSOR MIT REDUZIERTER ANFÄLLIGKEIT FÜR GASBLASENBILDUNG**
VIBRONIC SENSOR WITH REDUCED SENSITIVITY TO GAS BUBBLE FORMATION
CAPTEUR VIBRONIQUE À SENSIBILITÉ RÉDUITE À LA FORMATION DE BULLES DE GAZ

(30) Priorität: 17.02.2020 DE 102020104065
(43) Veröffentlichungstag der Anmeldung: 28.12.2022
(73) Patentinhaber: Endress+Hauser SE+Co. KG, 79689 Maulburg (DE)
(72) Erfinder: SCHLEIFERBÖCK, Jan, 79595 Rümmingen (DE); BRENGARTNER, Tobias, 79312 Emmendingen (DE); LOPATIN, Sergey, 79540 Lörrach (DE); ROSENHEIM, Julia, 79664 Wehr (DE)
(74) Vertreter: Koslowski, Christine Adelheid
(86) Internationale Anmeldenummer: PCT/EP2021/051990
(87) Internationale Veröffentlichungsnummer: WO 2021/165010

(56) Entgegenhaltungen:
- WO-A1-92/21945
- DE-A1- 102016 112 743
- DE-A1- 102018 111 629
- DE-A1- 3 149 909
- DE-A1- 3 336 991
- US-B2- 8 037 753

## Beschreibung

Die Erfindung betrifft eine Vorrichtung zur Bestimmung und/oder Überwachung von zumindest einer Prozessgröße eines Mediums umfassend eine mechanisch schwingfähige Einheit, eine Antriebs-/Empfangseinheit und eine Elektronikeinheit. Das Medium befindet sich dabei in einem Behältnis, beispielsweise in einem Behälter oder in einer Rohrleitung. Die Prozessgröße wiederum ist beispielsweise ein, insbesondere vorgebbarer Füllstand, ein Durchfluss, die Dichte oder die Viskosität des Mediums. Eine gattungsgemäße Vorrichtung offenbart die DE 10 2016 112 743 A1.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann.

Ein vibronischer Sensor mit einem Stapel piezoelektrischer Antriebs- und Sensorelemente ist in der Veröffentlichung WO 92/21945 A1 offenbart, wobei der Stapel mit einem an der Membran fixierten, unter Zugspannung stehenden Bolzen axial eingespannt ist, und wobei die mechanische Anregung der schwingfähigen Einheit über diesen Bolzen erfolgt.

In der DE 33 36 991 A1 wird ein vibronischer Sensor offenbart, bei welchem eine Einstellschraube eine Vorspannung der Membran erzeugt. Um die an der Membran angeformten Schwingstäbe im Ruhezustand voneinander fort zu verschwenken, wird eine solche Vorspannung eingestellt, dass die Membran nach außen durchgebogen ist.

Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE00102010030982A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also anhand einer Frequenzverschiebung, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten.

Die US 8,037,753 B2 offenbart einen Baukasten für modulare Feldgeräte, bei dem unterschiedliche Messprinzipien frei austauschbar realisiert werden können.

Die DE 31 49 909 A1 offenbart ein Messgerät zur Erfassung des Füllstands, wobei in den zwei Zinken einer Gabel jeweils ein Ultraschallwandler eingebracht ist. Ausgewertet werden zum einen die Laufzeit der Signale zwischen den Gabelzinken und zum anderen die Laufzeit der Signale, die sich innerhalb der Gabel selbst ausbreiten.

Eine Problematik bei auf mechanischen Schwingungen basierenden Sensoren betrifft das Vorhandensein von Gasblasen in unterschiedlichen Medien. Gasblasen haben einen großen Einfluss auf die viskoelastischen Eigenschaften von Flüssigkeiten. Entsprechend kann es zu einer ungewollten, nicht mit der jeweils betrachteten Prozessgröße in Zusammenhang stehenden, Veränderungen der Schwingfrequenz der schwingfähigen Einheit und damit einhergehend zu verfälschten Messwerten für die jeweilige Prozessgröße kommen.

Für die Entstehung von Gasblasen in flüssigen Medien können unterschiedlichste Faktoren verantwortlich sein, wie ein Rühr- oder Pumpvorgang im Prozess, eine Ausgasung gelöster Luft nach einer Drucksenkung im Medium, oder auch eine Änderung der Medientemperatur. Besonders häufig kommt es in Süßwasser oder wässrigen Lösungen zur Bildung von Gasblasen. Dabei spielen sowohl im Medium verteilte, also auch auf einer Oberfläche der jeweiligen Sensoreinheit des Sensors, welche die schwingfähige Einheit umfasst, abgeschiedene Gasblasen eine Rolle.

Aus der DE102015122661A1 ist beispielsweise ein Verfahren zum Ermitteln eines physikalischen Parameters einer mit Gas beladenen Flüssigkeit für ein nach dem Coriolis-Durchflussmessgerät bekannt geworden. Die schwingfähige Einheit wird in zwei unterschiedlichen Schwingungsmodi zu mechanischen Schwingungen angeregt, welche unterschiedlich stark von innerhalb des Mediums vorhandenen Gasblasen abhängen. Aus dem Verhältnis der für die Dichte und/oder den Massendurchfluss berechneten Werte in den beiden Schwingungsmodi kann der Einfluss der Gasblasen auf die Messung ermittelt und korrigiert werden.

Es wäre jedoch wünschenswert, das Anhaften von Gasblasen und die dadurch hervorgerufenen Messungenauigkeiten von vornherein vermeiden zu können. Somit liegt, ausgehend vom genannten Stand der Technik, der vorliegenden Erfindung die Aufgabe zugrunde, die Messgenauigkeit eines vibronischen Sensors zu verbessern.

Diese Aufgabe wird gelöst durch die Vorrichtung mit den Merkmalen des Anspruch 1.

Dass die Oberfläche der Membran erfindungsgemäß zumindest abschnittsweise konvex ausgestaltet ist, ist insbesondere dann von Vorteil, wenn die Vorrichtung von einer oberen oder seitlichen Wandung des Behältnisses an dem Behältnis angebracht ist.

Die schwingfähige Einheit ist Teil einer Sensoreinheit der Vorrichtung. Dabei handelt es sich erfindungsgemäß um eine Schwinggabel, bei welcher die schwingfähige Einheit die Membran und mehrere Schwingelemente umfasst, welche an der Membran angeformt sind. Die Antriebs-/Empfangseinheit dient einerseits zur Erzeugung der mechanischen Schwingungen der mechanisch schwingfähigen Einheit mittels eines elektrischen Anregesignals, welches beispielsweise ein sinusförmiges oder rechteckförmiges Signal sein kann. Sie dient aber ebenfalls zum Empfangen der mechanischen Schwingungen und zur Umwandlung der Schwingungen in ein elektrisches Empfangssignal. Die mechanischen Schwingungen der mechanisch schwingfähigen Einheit werden im Falle, dass die schwingfähige Einheit von Medium bedeckt ist, von den Eigenschaften des Mediums beeinflusst, sodass anhand des Empfangssignals, welches die Schwingungen der schwingfähigen Einheit repräsentiert, eine Aussage über die zumindest eine Prozessgröße generierbar ist. Vorzugsweise wird die mechanisch schwingfähige Einheit zumindest zeitweise zu Resonanzschwingungen angeregt.

Durch die gewölbte Ausgestaltung der Membran kann eine Ablagerung und/oder ein Anhaften von Gasblasen im Bereich der Membran deutlich reduziert werden. Im Falle von planaren Oberflächen hingegen findet eine Ablagerung von Gasblasen bevorzugt im Bereich der Membran statt, welche aufgrund des Archimedischen Prinzips dort verbleiben und nicht entweichen können. Bei einer gewölbten Oberfläche werden die Gasblasen dagegen aufgrund der Auftriebskraft von einem mittleren Bereich der Oberfläche nach außen bewegt und können von dort entweichen.

Für die konkrete Ausgestaltung der gewölbten Membran sind zahlreiche Varianten denkbar, welche allesamt unter die vorliegende Erfindung fallen. Die genaue Form und Beschaffenheit der Membran kann dabei je nach Anwendung, beispielsweise in Abhängigkeit der Einbausituation des Sensors, oder des Mediums, geeignet gewählt werden. Einige bevorzugte Ausgestaltungen für eine erfindungsgemäße Membran sind im Folgenden beispielhaft angegeben.

In einer Ausgestaltung ist die Oberfläche konisch, kegelstumpfförmig, halbkugelförmig oder in Form eines Kugelsegments ausgestaltet.

Noch eine Ausgestaltung beinhaltet, dass die Oberfläche, insbesondere im Bereich eines Mittelpunkts der Oberfläche, abgerundet ausgestaltet ist.

Eine alternative Ausgestaltung beinhaltet, dass die Oberfläche, insbesondere im Bereich eines Mittelpunkts der Oberfläche, eine Spitze aufweist. Eine Oberfläche mit Spitze kann insbesondere einen Abtrennprozess von sich auf der Oberfläche der Membran befindlichen Gasblasen beschleunigen.

In einer weiteren Ausgestaltung ist die Oberfläche symmetrisch in Bezug auf den Mittelpunkt der Oberfläche ausgestaltet. Eine symmetrische Ausgestaltung ist vorteilhaft in Bezug auf die Schwingungseigenschaften der schwingfähigen Einheit.

Noch eine Ausgestaltung beinhaltet, dass ein Winkel zwischen einer Ebene parallel zu einer Längsachse durch die Membran und einer Tangente an die Oberfläche der Membran kleiner gleich 45° ist. Eine derartige Ausgestaltung ist insbesondere dann sinnvoll, wenn es sich bei der Vorrichtung um einen vibronischen Multisensor handelt, wie er beispielsweise in der WO 2020/094266 A1 oder in DE 10 2018 127 526 A1 beschrieben ist.

Bei dem Sendesignal handelt es sich erfindungsgemäß um ein, insbesondere gepulstes, Ultraschallsignal, insbesondere um zumindest einen Ultraschallpuls. Als zweites angewendetes Messverfahren wird demnach im Rahmen der vorliegenden Erfindung eine Ultraschall-basierte Messung durchgeführt. Das jeweils ausgesendete Sendesignal durchläuft zumindest teilweise das Medium und wird von diesem in seinen Eigenschaften beeinflusst. Entsprechend können anhand des jeweils empfangenen zweiten Empfangssignals ebenfalls Rückschlüsse auf verschiedene Medien gezogen werden.

Erfindungsgemäß handelt es sich folglich um einen Multisensor, in welchem zwei unterschiedliche Messprinzipien vereinigt sind.

Erfindungsgemäß ist die mechanisch schwingfähige Einheit eine Schwinggabel mit einem ersten und einem zweiten Schwingelement, wobei das erste piezoelektrische Element zumindest teilweise in dem ersten Schwingelement und das zweite piezoelektrische Element zumindest teilweise in dem zweiten Schwingelement angeordnet ist. Entsprechende Ausgestaltungen einer Sensoreinheit sind beispielsweise in den Dokumenten DE 10 2012 100 728 A1 und DE 10 2017 130 527 A1 beschrieben worden.

Schließlich ist es von Vorteil, wenn eine Ausdehnung der Membran parallel zu einer Längsachse der Schwingelemente weniger als 20 % einer Länge der Schwingstäbe parallel zu der Längsachse beträgt.

Die Erfindung wird anhand der nachfolgenden Figuren näher erläutert. Es zeigt:
Fig. 1: eine schematische Skizze eines vibronischen Sensors gemäß Stand der Technik,
Fig. 2: eine schwingfähige Einheit in Form einer Schwinggabel mit einer (a) planar und (b) gewölbt ausgestalteten Oberfläche der Membran, und
Fig. 3a: eine erste beispielhafte Ausgestaltung für eine gewölbte Membran für einen erfindungsgemäßen Sensor;
Fig. 3b: eine beispielhafte Ausgestaltung für eine gewölbte Membran für einen nicht erfindungsgemäßen Sensor;
Fig. 3c: eine erste beispielhafte Ausgestaltung für eine gewölbte Membran für einen erfindungsgemäßen Sensor und
Fig. 3d: eine erste beispielhafte Ausgestaltung für eine gewölbte Membran für einen erfindungsgemäßen Sensor.

In den Figuren sind gleiche Elemente jeweils mit demselben Bezugszeichen versehen.

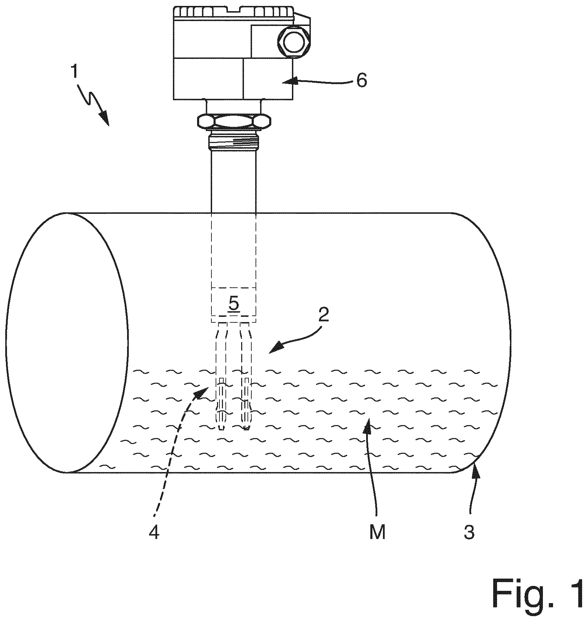

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, die beispielsweise durch einen piezoelektrischen Stapel- oder Bimorphantrieb realisiert sein kann. Andere vibronische Sensoren verfügen beispielsweise über elektromagnetische Antriebs- /Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder-speisung erfolgt.

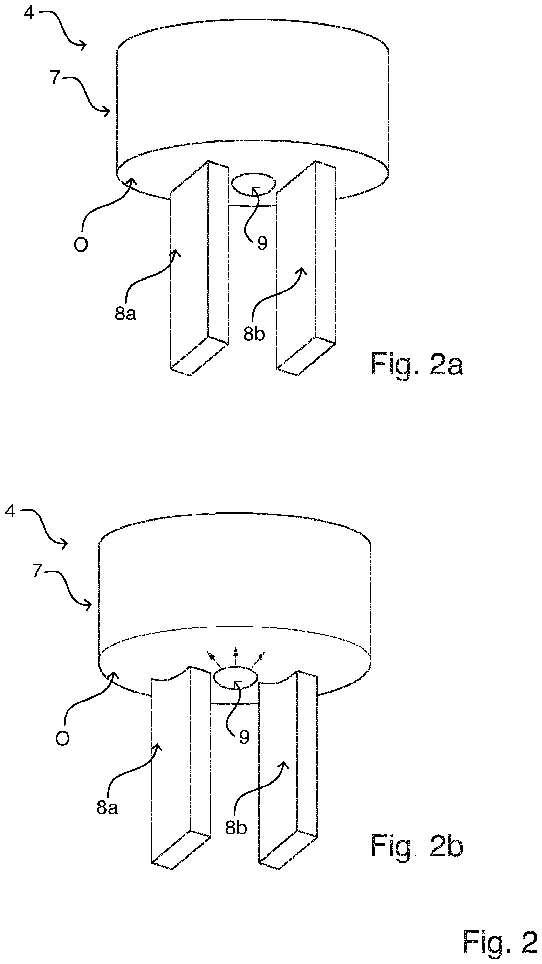

In Fig. 2 ist jeweils eine schwingfähige Einheit 4 in Form einer Schwinggabel dargestellt. Die Einheit 4 weist eine Membran 7 auf, an deren Oberfläche O, welche im in das Behältnis 3 eingebrachten Zustand dem Medium M ist, zwei Schwingelemente 8a,8b angeformt sind. In Fig. 2a ist die Oberfläche O der Membran 7 planar ausgestaltet. In der Folge können sich im Medium M enthaltene Gasblasen auf der Oberfläche O der Membran 7 anlagern und sind dort gemäß dem Archimedischen Prinzip gefangen.

Bei der in Fig. 2b dargestellten, erfindungsgemäßen Variante, ist die Oberfläche O der Membran 7 dagegen gewölbt ausgestaltet, so dass Gasblasen von der Mitte der Oberfläche O an deren Rand gelangen und von dort entweichen können. Eine gewölbte Ausgestaltung reduziert also die Empfindlichkeit eines vibronischen Sensors gegenüber der Anhaftung von Gasblasen und den damit verbundenen nachteiligen messtechnischen Effekten signifikant.

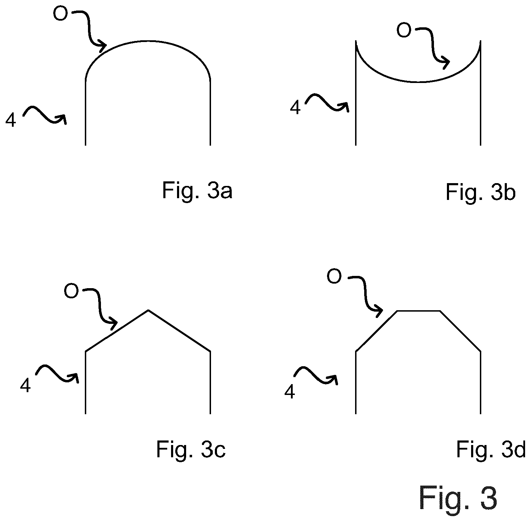

Für eine Membran sind zahlreiche Ausgestaltungen denkbar, von denen einige beispielhafte, jeweils in Form einer Schnittzeichnung, in Fig. 3 dargestellt sind. Die Oberfläche O kann, insbesondere je nach Einbausituation des Sensors 1, beispielsweise erfindungsgemäß konvex ausgestaltet sein, wie in Fig. 3a dargestellt, oder nicht erfindungsgemäß konkav, wie in Fig. 3b. In beiden Fällen ist die Oberfläche O abgerundet. Alternativ kann die Oberfläche O auch die Form einer Halbkugel oder eines Kugelsegments aufweisen. Wie in Fig. 3c dargestellt ist darüber hinaus auch eine Oberfläche O mit erfindungsgemäß einer Spitze, oder beispielsweise erfindungsgemäß in Form eines Kegelstumpfs, wie in Fig. 3d illustriert denkbar. Neben den hier gezeigten Ausgestaltungen sind noch zahlreiche weitere Möglichkeiten denkbar, welche allesamt unter die vorliegende Erfindung fallen. Auch sei darauf verwiesen, dass die Oberfläche O nicht zwingend symmetrisch ausgestaltet sein muss, wie es für die in Fig. 3 dargestellten Varianten der Fall ist. Vielmehr kann die Oberfläche O applikationsspezifisch gewählt werden.

### Bezugszeichenliste

- 1: Vibronischer Sensor
- 2: Sensoreinheit
- 3: Behälter
- 4: Schwingfähige Einheit
- 5: Antriebs-/Empfangseinheit
- 6: Elektronik
- 7: Membran
- 8a, 8b: Schwingelemente
- 9: Gasblasen

- M: Medium
- P: Prozessgröße

## Patentansprüche

1. Vorrichtung (1) zur Bestimmung und/oder Überwachung von zumindest einer Prozessgröße (P) eines Mediums (M) umfassend eine mechanisch schwingfähige Einheit (4), ein als Antriebs-/Empfangseinheit (5) dienendes erstes piezoelektrisches Element und eine Elektronikeinheit (6),
wobei die Antriebs-/Empfangseinheit (5) dazu ausgestaltet ist, mittels eines elektrischen Anregesignals die mechanisch schwingfähige Einheit (4) zu mechanischen Schwingungen anzuregen, die mechanischen Schwingungen der mechanisch schwingfähigen Einheit (4) zu empfangen und in ein erstes elektrisches Empfangssignal umzuwandeln,
wobei die Elektronikeinheit (6) dazu ausgestaltet ist, das Anregesignal ausgehend vom ersten Empfangssignal zu erzeugen und eine Frequenz des Anregesignals derart einzustellen, dass eine vorgebbare Phasenverschiebung zwischen dem Anregesignal und dem ersten Empfangssignal vorliegt,
wobei die mechanisch schwingfähige Einheit (4) eine Membran (7) umfasst, und
wobei an der Membran (7) ein erstes Schwingelement (8a) und ein zweites Schwingelement (8b) angeformt sind,
**dadurch gekennzeichnet,**
**dass** eine dem Prozess zugewandte Oberfläche (O) der Membran (7) gewölbt ist,
**dass** die Oberfläche (O) der Membran (7) zumindest abschnittsweise konvex ausgestaltet ist,
**dass** die Vorrichtung (1) ferner zumindest ein zweites piezoelektrisches Element umfasst,
**dass** das erste piezoelektrische Element zumindest teilweise in dem ersten Schwingelement (8a) und das zweite piezoelektrische Element zumindest teilweise in dem zweiten Schwingelement (8b) angeordnet ist, dass das erste piezoelektrische Element und das zweite piezoelektrische Element dazu ausgestaltet sind, die mechanisch schwingfähige Einheit (4) mittels des Anregesignals zu mechanischen Schwingungen anzuregen, die mechanischen Schwingungen der schwingfähigen Einheit (4) zu empfangen und in das erste Empfangssignal umzuwandeln,
**dass** das erste piezoelektrische Element dazu ausgestaltet ist, ein Sendesignal, bei dem es sich um ein Ultraschallsignal handelt, auszusenden,
**dass** das zweite piezoelektrische Element dazu ausgestaltet ist, das Sendesignal in Form eines zweiten Empfangssignals zu empfangen, und
**dass** die Elektronikeinheit (6) dazu ausgestaltet ist, anhand des ersten Empfangssignals und/oder anhand des zweiten Empfangssignals die zumindest eine Prozessgröße (P) des Mediums (M) zu bestimmen.

2. Vorrichtung (1) nach Anspruch 1,
wobei die Oberfläche (O) konisch, kegelstumpfförmig, halbkugelförmig oder in Form eines Kugelsegments ausgestaltet ist.

3. Vorrichtung (1) nach Anspruch 1 oder 2,
wobei die Oberfläche (O) im Bereich eines Mittelpunkts der Oberfläche (O) abgerundet ausgestaltet ist.

4. Vorrichtung (1) nach Anspruch 1 oder 2,
wobei die Oberfläche (O) im Bereich eines Mittelpunkts der Oberfläche (O) eine Spitze aufweist.

5. Vorrichtung (1) nach einem der Ansprüche 1 bis 4,
wobei die Oberfläche (O) symmetrisch in Bezug auf einen Mittelpunkt der Oberfläche (O) ausgestaltet ist.

6. Vorrichtung (1) nach einem der Ansprüche 1 bis 5,
wobei ein Winkel zwischen einer Ebene parallel zu einer Längsachse durch die Membran (7) und einer Tangente an die Oberfläche (O) der Membran (7) kleiner gleich 45° ist.

7. Vorrichtung (1) nach einem der Ansprüche 1 bis 6,
wobei eine Ausdehnung der Membran (7) parallel zu einer Längsachse der Schwingelemente (8a, 8b) weniger als 20 % einer Länge der Schwingstäbe (8a, 8b) parallel zu der Längsachse beträgt.

## Claims

1. Device (1) for determining and/or monitoring at least one process variable (P) of a medium (M), comprising a mechanically vibrating unit (4), a first piezoelectric element serving as a drive/receiver unit (5) and an electronics unit (6),
wherein the drive/receiver unit (5) is designed to excite the mechanically vibrating unit (4) to mechanical vibrations by means of an electrical excitation signal, to receive the mechanical vibrations of the mechanically vibrating unit (4) and to convert them into a first electrical reception signal,
wherein the electronic unit (6) is designed to generate the excitation signal starting from the first received signal and to adjust a frequency of the excitation signal in such a way that a predeterminable phase shift is present between the excitation signal and the first received signal,
wherein the mechanically vibrating unit (4) comprises a diaphragm (7), and
wherein a first oscillating element (8a) and a second oscillating element (8b) are formed on the diaphragm (7),
**characterized in that**
that a surface (O) of the membrane (7) facing the process is curved,
that the surface (O) of the membrane (7) is convex at least in sections,
that the device (1) further comprises at least a second piezoelectric element,
**in that** the first piezoelectric element is arranged at least partially in the first oscillating element (8a) and the second piezoelectric element is arranged at least partially in the second oscillating element (8b),
**in that** the first piezoelectric element and the second piezoelectric element are designed to excite the mechanically vibrating unit (4) to mechanical vibrations by means of the excitation signal, to receive the mechanical vibrations of the vibrating unit (4) and to convert them into the first reception signal,
that the first piezoelectric element is designed to emit a transmission signal, which is an ultrasonic signal,
**in that** the second piezoelectric element is designed to receive the transmit signal in the form of a second receive signal, and
**in that** the electronics unit (6) is designed to determine the at least one process variable (P) of the medium (M) on the basis of the first received signal and/or on the basis of the second received signal.

2. Device (1) according to claim 1,
wherein the surface (O) is conical, frustoconical, hemispherical or in the form of a spherical segment.

3. Device (1) according to claim 1 or 2,
wherein the surface (O) is rounded in the area of a center point of the surface (O).

4. Device (1) according to claim 1 or 2,
wherein the surface (O) has a tip in the region of a center point of the surface (O).

5. Device (1) according to any one of claims 1 to 4,
wherein the surface (O) is symmetrical with respect to a center point of the surface (O).

6. Device (1) according to any one of claims 1 to 5,
wherein an angle between a plane parallel to a longitudinal axis through the membrane (7) and a tangent to the surface (O) of the membrane (7) is less than or equal to 45°.

7. Device (1) according to any one of claims 1 to 6,
wherein an extension of the diaphragm (7) parallel to a longitudinal axis of the oscillating elements (8a, 8b) is less than 20% of a length of the oscillating rods (8a, 8b) parallel to the longitudinal axis.

## Revendications

1. Dispositif (1) pour la détermination et/ou la surveillance d'au moins une grandeur de processus (P) d'un milieu (M) comprenant une unité (4) capable d'osciller mécaniquement, un premier élément piézoélectrique servant d'unité d'entraînement/de réception (5) et une unité électronique (6),
l'unité d'entraînement/de réception (5) étant conçue pour exciter, au moyen d'un signal d'excitation électrique, l'unité (4) capable d'osciller mécaniquement en oscillations mécaniques, pour recevoir les oscillations mécaniques de l'unité (4) capable d'osciller mécaniquement et pour les convertir en un premier signal de réception électrique,
l'unité électronique (6) étant conçue pour générer le signal d'excitation à partir du premier signal de réception et pour régler une fréquence du signal d'excitation de telle sorte qu'il existe un déphasage prédéfinissable entre le signal d'excitation et le premier signal de réception,
dans lequel l'unité mécaniquement vibrante (4) comprend une membrane (7), et
un premier élément vibrant (8a) et un deuxième élément vibrant (8b) étant formés sur la membrane (7),
**caractérisé en ce que**
**en ce qu'**une surface (O) de la membrane (7) tournée vers le processus est bombée,
**en ce que** la surface (O) de la membrane (7) est configurée de manière convexe au moins par sections,
**en ce que** le dispositif (1) comprend en outre au moins un deuxième élément piézoélectrique,
**en ce que** le premier élément piézoélectrique est disposé au moins partiellement dans le premier élément vibrant (8a) et le deuxième élément piézoélectrique est disposé au moins partiellement dans le deuxième élément vibrant (8b),
**en ce que** le premier élément piézoélectrique et le deuxième élément piézoélectrique sont conçus pour exciter l'unité (4) capable d'osciller mécaniquement en oscillations mécaniques au moyen du signal d'excitation, pour recevoir les oscillations mécaniques de l'unité (4) capable d'osciller et pour les convertir en le premier signal de réception,
**en ce que** le premier élément piézoélectrique est conçu pour émettre un signal d'émission, qui est un signal ultrasonore,
**en ce que** le deuxième élément piézoélectrique est conçu pour recevoir le signal d'émission sous la forme d'un deuxième signal de réception, et que l'unité électronique (6) est conçue pour déterminer l'au moins une grandeur de processus (P) du milieu (M) à l'aide du premier signal de réception et/ou à l'aide du deuxième signal de réception.

2. Dispositif (1) selon la revendication 1,
la surface (O) étant de forme conique, tronconique, hémisphérique ou en forme de segment de sphère.

3. Dispositif (1) selon la revendication 1 ou 2,
la surface (O) étant arrondie dans la zone d'un point central de la surface (O).

4. Dispositif (1) selon la revendication 1 ou 2,
dans lequel la surface (O) présente une pointe dans la zone d'un point central de la surface (O).

5. Dispositif (1) selon l'une quelconque des revendications 1 à 4,
dans lequel la surface (O) est configurée de manière symétrique par rapport à un centre de la surface (O).

6. Dispositif (1) selon l'une quelconque des revendications 1 à 5,
dans lequel un angle entre un plan parallèle à un axe longitudinal traversant la membrane (7) et une tangente à la surface (O) de la membrane (7) est inférieur ou égal à 45°.

7. Dispositif (1) selon l'une quelconque des revendications 1 à 6,
dans lequel une extension de la membrane (7) parallèlement à un axe longitudinal des éléments vibrants (8a, 8b) est inférieure à 20 % d'une longueur des barres vibrantes (8a, 8b) parallèlement à l'axe longitudinal.
